# EUROPÄISCHE PATENTSCHRIFT

(11) **EP 2 978 102 B1**
(45) Veröffentlichungstag und Bekanntmachung des Hinweises auf die Patenterteilung: **22.02.2017**
(21) Anmeldenummer: 14177992.6
(22) Anmeldetag: 22.07.2014
(51) Int. Cl.: H02K 1/27, H02K 15/03

(54) **Verfahren zur Herstellung eines Rotors**
Method for producing a rotor
Procédé pour la fabrication d'un rotor

(43) Veröffentlichungstag der Anmeldung: 27.01.2016
(73) Patentinhaber: Siemens Aktiengesellschaft, 80333 München (DE)
(72) Erfinder: Geis, Peter, 97616 Bad Neustadt (DE); Glück, Marko, 97616 Bad Neustadt a. d. S. (DE); Knorre, Björn, 06386 Micheln (DE); Kraus, Andreas, 97647 Sondheim (DE); Martin, Jürgen, 93051 Regensburg (DE); Sterzinger, Melanie, 97638 Mellrichstadt - Bahra (DE); Streit, Dietmar, 97640 Oberstreu (DE); Then, Juliane, 97702 Münnerstadt (DE)

(56) Entgegenhaltungen:
- EP-A1- 2 149 965
- EP-A1- 2 685 607
- EP-A1- 2 685 615
- US-A- 6 047 461
- US-A1- 2010 019 589

## Beschreibung

Die Erfindung betrifft ein Verfahren zur Herstellung eines Rotors. Weiter betrifft die Erfindung einen Rotor und eine Spindel, die mit einem solchen Verfahren hergestellt worden ist. Weiter betrifft die Erfindung eine elektrische Maschine, insbesondere eine permanenterregte Synchronmaschine, mit einem solchen Rotor.

Ein Rotor einer permanent erregten Synchronmaschine besteht meist aus einem Blechpaket und mehreren Permanentmagnete, die an der Mantelfläche in Reihen entlang der Rotationsachse angeordnet sind, sowie gegebenenfalls einer Ummantelung mit einem nichtmagnetischen Material. Oft ist die Mantelfläche des Rotors mit Reihen von Permanentmagneten überdeckt, wobei sich die Reihen der Permanentmagnete dicht nebeneinander um die Mantelfläche des Rotors herum angeordnet sind.

DE 10 2007 016 771 B4 beschreibt eine Anordnung zur Befestigung von Magneten auf Rotoren von permanenterregten Synchronmaschinen, wobei die Permanentmagnete in Vertiefungen des Rotors angeordnet sind und von einer Bandage ummantelt sind.

Die Aufgabe der Erfindung ist es, durch ein Herstellungsverfahren einen Rotor oder eine elektrische Maschine bereitzustellen, die mit Permanentmagneten unterschiedlicher Fertigungstoleranzen besetzt sind und besonders leistungsfähig bzw. energieeffizient sind.

Weiter ist es Aufgabe, einen Rotor bereitzustellen, der eine glatte Mantelfläche ohne Einbuchtungen aufweist.

Diese Aufgabe wird durch ein Verfahren zur Herstellung eines Rotors gemäß Anspruch 1 gelöst.

Weiter wird diese Aufgabe durch einen Rotor und durch eine Spindel gelöst, die durch ein solches Verfahren hergestellt worden ist.

Weiter wird diese Aufgabe durch eine elektrische Maschine, insbesondere einer permanent angetriebene Synchronmaschine, mit einem solchen Rotor gelöst.

Die weiteren Ansprüche stellen vorteilhafte Ausgestaltungsformen des Verfahrens zur Herstellung des Rotors dar.

Vorteilhaft erfolgt bei der Herstellung eines Rotors, die Anordnung von Permanentmagneten auf einer Mantelfläche des Rotors, insbesondere in einer Vertiefung in der Mantelfläche. Hierzu werden Permanentmagnete von einer Position aus in Reihen entlang der Rotationsachse des Rotors aneinander bis zu einer Seite hin oder zwei Seiten hin angeordnet. Ein Rotor weist meist mehrere, dicht nebeneinander liegende solche Reihen auf.

Als Permanentmagnete werden vorgefertigte Permanentmagnete mit einer Länge, Breite und Höhe eingesetzt. Die Permanentmagnete liegen dicht aneinander in einer Reihe, wobei ein Spalt zwischen den Permanentmagneten nicht vorgesehen ist. Die Reihen sind jeweils benachbart. Je nach Einsatzgebiet des Rotors sind die Reihen beanstandet oder nicht.

Permanentmagnete weisen regelmäßig eine Fertigungstoleranz in ihren Ausmaßen wie Länge, Breite und Höhe auf. Insbesondere bei einer Anordnung der Permanentmagnete in Reihen entlang der Rotationsachse (Längsachse) des Rotors summieren sich die Fertigungstoleranzen gegebenenfalls zu einer unterschiedlichen Gesamtlänge der Reihen auf. Diese Summenbildung hat zur Folge, dass sich unterschiedliche Reihen von Permanentmagneten zu Reihen unterschiedlicher Gesamtlängen formieren. Der Abstand entlang des Umfangs auf der Mantelfläche zwischen dem Ende der Permanentmagnete und einem Ende der Vertiefung, definiert durch eine Innenfläche der Vertiefung, die etwa rechtwinklig zu der Mantelfläche verläuft, bildet den variablen Spalt. Der variable Spalt wird durch ein Endscheibenband abgedeckt.

Nach der Anordnung der Permanentmagnete auf dem Rotor und dem Aufbringen des Endscheibenbandes kann der Rotor mit einer Ummantelung, insbesondere einer Bandage, umwickelt werden.

Die Ummantelung dient zur Stabilisierung der Position der Permanentmagnete auf der Mantelfläche des Rotors. Weiter dient die Ummantelung zur Erstellung einer glatten Mantelfläche, insbesondere dass die Ummantelung nicht in Spalte zwischen die Permanentmagnete eindringt und die Oberfläche mit Einbuchtungen beaufschlagt.

Gemäß dem bisherigen Stand der Technik mussten die Permanentmagnete in einem mauerartigen (versetzten) Muster auf dem Rotor angeordnet werden. Das versetzte Muster, welches analog der Anordnung von Ziegeln einer Wand ergibt, wurde daher eingefügt, dass es keinen Spalt zwischen den Permanentmagneten ergibt, in den die Ummantelung beim oder nach dem Aufbringen (Wickeln) eindringen konnte. Durch das Eindringen der Ummantelung in den Spalt ist gemäß dem Stand der Technik die Oberfläche der Ummantelung uneben gewesen und die Permanentmagnete gegebenenfalls aus ihrer optimalen Position geschoben worden. Gemäß einem wichtigen Aspekt der Erfindung führen die Fertigungstoleranzen nicht mehr zu einem Spalt zwischen den Permanentmagneten. Die Längenunterschiede führen so nur noch zu einen (oder zwei) variablen Spalt an der zumindest einen Seite der Anordnung, wobei der variable Spalt einmal um die Mantelfläche herum verläuft.

Durch das hier vorgeschlagene Verfahren können die Magnete vorteilhaft ohne einen Abstand (pro Magnetpol) und direkt nebeneinander (und nicht in einem versetzten Muster) besonders platzsparend angeordnet der Vertiefung des Rotors angeordnet werden. So entfallen spezielle Zuschnitte der Permanentmagnete und es lassen sich mehr Permanentmagnete auf einem Rotor anordnen.

In einer vorteilhaften Ausgestaltung des Verfahrens werden die Permanentmagnete in einer Vertiefung angeordnet.

Die Vertiefung, insbesondere abschnittsweise und axial verlaufend, des Rotors wird vorteilhaft in die Mantelfläche eingefügt. Die Vertiefung kann bei einem Rotor, der ein Blechpaket aufweist, durch eine Wahl von Blechen in der Mitte des Rotors erreicht werden, die einen kleineren Durchmesser als die Bleche aufweisen, die in den Randbereichen des Rotors (nahe der Grundfläche und/oder der Deckfläche) Verwendung finden. Durch eine Wahl der jeweiligen Durchmesser lässt sich auch eine Kontur in die Vertiefung einbringen.

Die Anordnung der Permanentmagnete in der Vertiefung birgt den Vorteil, dass die Außenseiten der Permanentmagnete mit der Mantelfläche des Rotors, insbesondere bündig, eine Fläche bilden können und eine Ummantelung keine Höhenunterschiede überbrücken muss.

In einer weiteren vorteilhaften Ausführungsform werden die Permanentmagnete so angeordnet, dass eine Ummantelung beim Wickelprozess nicht in einen Spalt zwischen den Permanentmagneten oder in den zumindest einen variablen Spalt eindringt.

Die Anordnung der Permanentmagnete von einer Position aus erlaubt die Anordnung der Permanentmagnete direkt nebeneinander, so dass sich kein makroskopischer Spalt zwischen den Permanentmagneten selbst ergibt. Die Fertigungstoleranzen ergeben lediglich den variablen Spalt, der mit dem Endscheibenband gesondert abgedeckt wird.

Der variable Spalt ergibt sich aus dem axialen Abstand des Endes der Reihe der Permanentmagnete und einer Innenseite der Vertiefung, die zu einer Grundfläche bzw. einer Deckfläche etwa parallel verläuft.

Falls die Permanentmagnete auf der Mantelfläche des Rotors, d. h. nicht in einer Vertiefung angeordnet werden, so überdeckt das Endscheibenband die Außenkanten der Permanentmagnete, die an dem jeweiligen Ende der Reihe angeordnet worden sind. In einer solchen Ausgestaltung überbrückt das Endscheibenband nicht eine viereckige Aussparung sondern umschließt einen dreieckigen Versatz.

Vorteilhaft lassen sich so gegebenenfalls mehr und/oder größere Permanentmagnete in den Rotor integrieren, da sich zwischen den Permanentmagneten selbst kein Spalt mehr ergibt, beziehungsweise nur ein natürlicher Spalt aufgrund der Unebenheit der Oberflächen der Permanentmagnete. Durch die Abdeckung des variablen Spaltes können zudem der spezielle Zuschnitt von Permanentmagneten vermindert werden.

In einer weiteren Ausgestaltung des Verfahrens ragt die Vertiefung bereichsweise in zumindest einem Randbereich tiefer in den Rotor hinein.

Da das Endscheibenband eine Dicke von 0,5 bis 2 Millimeter betragen kann und/oder die Ummantelung an zumindest einer Stelle zur Erzeugung einer ausreichenden Spannung bereichsweise mehrmals um den Rotor herumgewickelt werden muss, ist es vorteilhaft, die Kontur bzw. die Vertiefung entsprechend anzupassen. Beispielsweise erfolgt an beiden Seiten, die nahe der Grundfläche bzw. der Deckfläche des Rotors lokalisiert, eine dreieckige Einkerbung in die Vertiefung, so dass die Permanentmagnete, die sich am jeweiligen Ende der Anordnung befinden, leicht zur Rotationsachse hin geneigt sind. In aufgrund der Kontur ergebende Vertiefung kann mit dem Endscheibenband ausgefüllt werden, so dass sich eine Glatte Oberfläche ergibt, welche anschließend mit einer Ummantelung abgedeckt wird.

Es kann auch eine zusätzliche Vertiefung in die Mantelfläche eingebracht werden, um die Ummantelung bereichsweise aufzunehmen, insbesondere in Stellen, wo die Ummantelung dicker aufzutragen ist. Falls die Ummantelung aus einer Bandage besteht, die um die Mantelfläche des Rotors herumgewickelt wird, ist eine weitere Vertiefung in einem Bereich, wo die Bandage mehrmals um den Rotor umwickelt wird, sinnvoll. So kann ein bündiger Abschluss erreicht werden.

In einer weiteren Ausgestaltung des Verfahrens erstreckt sich die Position parallel zu einer Deckfläche und/oder parallel zu einer Bodenfläche um die Mantelfläche des Rotors herum.

Bei einem zylinderförmigen Rotor werden die Permanentmagnete von einer mittigen Position auf dem Rotor herum nach einer Seite oder nach zwei Seiten hin angeordnet. Die Anordnung der Permanentmagnete nebeneinander in Rotationsrichtung werden solche Reihen (bestehend aus nebeneinander angeordneten Permanentmagneten), gegebenenfalls zueinander beabstantandet, um die Mantelfläche des Rotors herum angeordnet. Somit ergibt sich die Position als einen Umfang der Mantelfläche des Rotors. Bei einer beabstandeten Anordnung der Reihen kann die Position lediglich als Punkte/Bereiche auf dem Umfang definiert sein.

Vorteilhaft ist diese Position, bzw. der Umfang, der die Position definiert, etwa auf der halben Höhe des Rotors, falls die Permanentmagnete in zwei Richtungen aneinander angeordnet werden.

Falls die Permanentmagnete in einer Reihe beginnend von einer Seite der Vertiefung zur anderen hin angeordnet werden, so definiert sich die Position um die Seite herum, an der die Permanentmagnete an einer Seite anliegen, bzw. die Reihen der Permanentmagnete beginnen.

Bei einer weiteren Ausgestaltung des Verfahrens erfolgt die Ummantelung mit einer Bandage.

Die Ummantelung dient zur Stabilisierung der Permanentmagnete auf den Rotor, insbesondere gegen Zentifugalkräfte. Weiter dient die Ummantelung für eine gleichmäßige Oberfläche des Rotors ohne Erhebungen/Senken. Die Permanentmagnete sind meist in das Blechpaket des Rotors eingefasst und/oder in der dafür vorgesehenen Vertiefung des Rotors angeordnet. Um den Zentrifugalkräften entgegenzuwirken, die bei der Rotation des Rotors auf die Permanentmagnete wirken, werden die Permanentmagnete und/oder der Rotor selbst mit einer Ummantelung versehen. Somit kann eine Befestigung der Permanentmagnete auf dem Rotor unterstützt werden.

Als Ummantelung eignet sich besonders eine Bandage. Die Bandage besteht vorteilhaft aus einem Fasermaterial, beispielsweise Glasfasern, die in eine Matrix in einem bandförmigen Gebilde zusammengehalten werden.

Dieses Gebilde, ähnlich einem Klebeband, wird vorteilhaft an einem Ende zunächst einige Male um den Rotor herumgewickelt. So kann eine ausreichende Zugspannung für die weiteren Umwicklungen bereitgestellt werden, wobei die Bandage um die Permanentmagnete herumgewickelt werden. Nach dem gegebenenfalls erfolgtem Aushärten der Matrix bildet die Bandage eine stabile Ummantelung des Rotors, indem die Permanentmagnete gegen die Wirkung der Zentrifugalkräfte geschützt sind. Weiterhin bildet die Bandage eine glatte Oberfläche. An den Bereichen, in den die Bandage mehrmals aufgetragen wird, ist die Oberfläche des Rotors, der Vertiefung sowie gegebenenfalls der weiteren Vertiefung so angepasst, dass der Radius über den gesamten Rotor gleich ist.

In einer weiteren vorteilhaften Ausgestaltung des Verfahrens ist die Position etwa auf der halben Höhe der Mantelfläche des Rotors positioniert und die Permanentmagnete zu beiden Seiten in Rotationsrichtung der Rotors angeordnet und wobei der variable Spalt sowohl nahe der Grundfläche und/oder nahe der Deckfläche des Rotors mit dem Endscheibenband abgedeckt werden.

In dieser vorteilhaften Ausgestaltung werden die Permanentmagnete von der Mitte jeweils entlang der Rotationsachse nebeneinander zu Reihen, die aneinander liegen (und sich gegebenenfalls bereichsweise berühren), angeordnet. Die Anordnung erfolgt in Richtung zur Deckfläche und zur Grundfläche des Rotors. Zur Überdeckung der beiden variablen Spalte nahe der Grundfläche und der Deckfläche dient das Endscheibenband.

Das Endscheibenband kann auch als ein Endscheibenring ausgestaltet sein, der über den jeweiligen variablen Spalt gespannt wird.

Der Endscheibenring kann als geschlossener Ring als auch in Form mehrerer Segmente ausgestaltet sein. Das Endscheibenband kann auch in einer geschlitzten Form/Ausgestaltung vorliegen. Das Endscheibenband und/oder ein weiteres Band kann auch zur Abdeckung sich auftuender weiterer Spalte in axialer Richtung, z.B. zwischen einzelnen Permanentmagneten eingesetzt werden.

Die Magnete können zur Aufnahme des Endscheibenbandes teilweise gewinkelt angeordnet werden. Der Winkel wird durch eine Schrägstellung der Magnete nahe dem variablen Spalt realisiert sein. Durch die Schrägstellung wird zusätzlich die Kompaktheit des Rotors erhöht.

Bei einer weiteren vorteilhaften Ausgestaltung des Verfahrens besteht das Endscheibenband aus einem Kunststoff oder aus einem Metall, so dass die Ausbreitung eines Magnetfeldes nur vernachlässigbar beeinträchtigt wird.

Das Endscheibenband besteht vorteilhaft aus Kupfer, Aluminium oder einem anderen nichtmagnetischen Material, so dass das Magnetfeld der Permanentmagnete nicht negativ beeinflusst wird. Je nach Belastung des Rotors kann das Endscheibenband auch aus einem Kunststoff wie Teflon oder PVC bestehen.

Bei einer weiteren vorteilhaften Ausgestaltung des Verfahrens wird die Vertiefung in Tiefe und Kontur so gewählt, dass sich nach dem Ummanteln ein gleichbleibender Radius über die Länge parallel zur Rotationsachse des Rotors ergibt.

Da zu einer besonders stabilen Ausgestaltung des Rotors gegebenenfalls zu einem unterschiedlich starken Auftrag der Ummantelung, insbesondere der Bandage, bedarf, ist es für eine möglichst glatte Oberfläche vorteilhaft, die Vertiefung in Form, Tiefe und Kontur entsprechend anzupassen.

Dort wo die Permanentmagnete in Rotationsrichtung gewinkelt (zur Rotationsachse geneigt) angeordnet werden, ist eine bereichsweise Vertiefung der Vertiefung notwendig, wobei die bereichsweise Vertiefung der Vertiefung z.B. eine dreieckige oder stufenförmige Kontur aufweist.

Vorteilhaft kann die Vertiefung aus mehreren einzelnen Vertiefungen bestehen. So kann der Rotor eine bereichsweise Vertiefung neben der Vertiefung für die Permanentmagnete aufweisen, um der Ummantelung einen stabilen Halt zu geben, ohne die Oberfläche mit bereichsweisen Anstiegen des Radius des Rotors zu beaufschlagen.

Die vorstehenden Ausführungen sind selbstverständlich nicht auf einen Rotor, insbesondere nicht auf einen Rotor einer dynamoelektrischen Maschine, beschränkt. Die hier beschriebene technische Lehre ist insbesondere ebenfalls bei der Herstellung einer Spindel, insbesondere einer Motorspindel, beispielsweise für eine Werkzeugmaschine, anwendbar.

Im Folgenden wird die Erfindung anhand von Figuren näher beschrieben und erläutert. Dabei zeigt
FIG 1 einen Rotor,
FIG 2 einen Rotor in einer Schnittdarstellung,
FIG 3 einen Rotor in Schnittdarstellung,
FIG 4 eine weitere Ausführung eines Rotors,
FIG 5 eine Explosionszeichnung des Rotors mit seiner Vertiefung sowie
FIG 6 eine schematische Darstellung eines Rotors im Schnitt.

Es sei vorwegeschickt, dass die gezeigten Ausführungsbeispiele lediglich beispielhaft die einzelnen Merkmale offenbaren. Die einzelnen Merkmale der unterschiedlichen Ausführungsformen können selbstverständlich kombiniert werden.

Ferner enthalten die Figuren der Zeichnungen, deren Beschreibungen sowie der Ansprüche zahlreiche Merkmale in Kombination. Einem Fachmann ist dabei klar, dass diese Merkmale auch einzeln betrachtet werden können, oder sie zu weiteren, hier nicht explizit offenbarten Kombinationen zusammengefasst werden können.

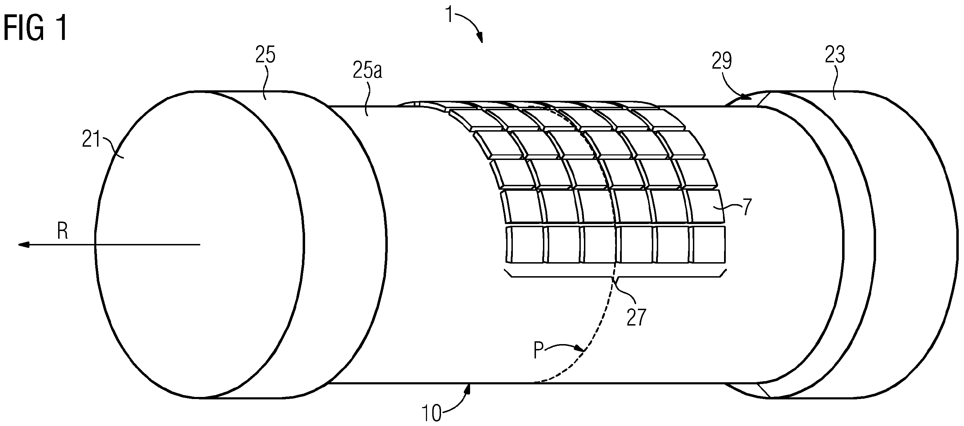

FIG 1 zeigt einen Rotor 1. Der Rotor 1 ist zylinderförmig dargestellt. Der Rotor 1 weist eine Mantelfläche 25 auf, sowie eine Deckfläche 21 und eine Grundfläche 23. Der Rotor 1 weist an seiner Mantelfläche 25 eine Vertiefung 10 auf, wobei die Vertiefung zwei Innenflächen 29 besitzt, wobei die Innenflächen 29 parallel zu der Grundfläche 21 beziehungsweise der Deckfläche 23 ist. Zumindest eine der Innenflächen 29 kann jedoch auch bezüglich der Grundfläche 21 oder der Deckfläche 23 geneigt sein.

Die Vertiefung 10 weist weiter eine zur Rotationsachse R hin verschobene Mantelfläche 25a auf. Auf der verschobenen Mantelfläche 25a werden die Permanentmagnete 7, ausgehend von einer Position P, jeweils in einer Reihe 27 angeordnet. Wie gezeigt, sind die Reihen 27 von Permanentmagneten 7 nebeneinander angeordnet und können nach Beendigung des Verfahrens der Anordnung der Permanentmagnete 7 die verschobene Mantelfläche 25a nahezu, bis auf die variablen Spalten 9a, abdecken.

Der Rotor 1 zeichnet sich durch eine Rotationsachse R aus, wobei die Rotationsachse R vorteilhaft durch den Schwerpunkt des Rotors verläuft.

Im Folgenden werden zur vereinfachten Darstellung Schnittdarstellungen des Rotors 1 gezeigt.

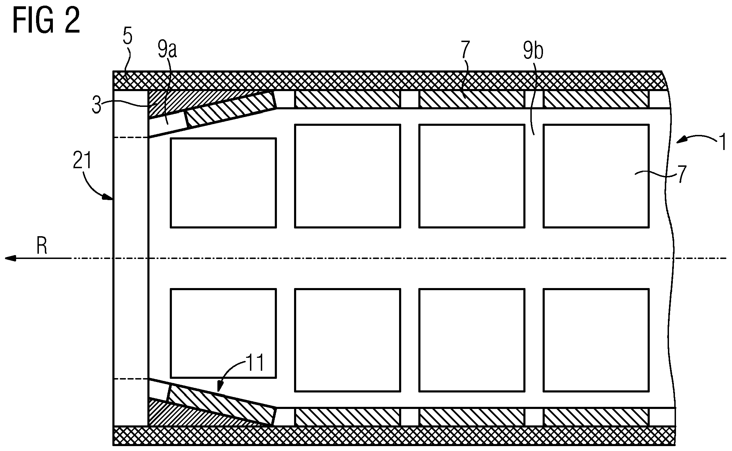

FIG 2 zeigt einen Rotor 1 in einer Schnittdarstellung. Der Rotor 1 weist an seiner Mantelfläche 25 Permanentmagneten 7 auf, wobei die Permanentmagnete 7 um die verschobene Mantelfläche 25a herum in der Vertiefung 10 angeordnet sind. Die Permanentmagnete 7 sind in einer Vertiefung 10 angeordnet, so dass die Permanentmagnete 7 ihre Position auch während der Rotation des Rotors 1 beibehalten. Die Vertiefung 10 des Rotors 1 weist an einer Seite eine, nach innen zeigende, dreieckige Kontur 31 auf. Aufgrund der Kontur 11 der Vertiefung 10 sind die Permanentmagnete 7, welche der Innenfläche 29 benachbart angeordnet sind, leicht zur Rotationsachse R hin geneigt.

Aufgrund der Fertigungstoleranz der Permanentmagnete 7, d.h. unterschiedliche Längen und Breiten der Permanentmagnete 7 weisen die Reihen 27 eine jeweils leicht unterschiedliche Gesamtlänge auf. Durch die unterschiedlichen Gesamtlängen der Reihen 27, von der Position P bis fast zu der jeweiligen Innenfläche 29 bildet sich ein variabler Spalt 9a zwischen der entsprechenden Außenseite der geneigt angeordneten Permanentmagnete 7 und der Innenfläche 29 aus. Der variable Spalt 9a wird durch die Seiten der Permanentmagnete 7 und die Innenfläche 29 sowie der innen liegenden Vertiefung 10 definiert. Der variable Spalt 9a wird durch das Endscheibenband 3 abgedeckt. Das Endscheibenband 3 kann vorteilhaft aus einem Metallband bestehen, welches zumindest einmal über den variablen Spalt 9a herum gewickelt wird. Das Endscheibenband 3 kann, wie gezeigt, ein dreieckiges Profil aufweisen. Das Endscheibenband kann jedoch auch ein rechteckiges Profil aufweisen und/oder auf einer Seite auf der Mantelfläche 25, wobei die Mantelfläche einen kleinen Absatz aufweist, auf der einen Seite und auf den Permanentmagneten 7 auf der anderen Seite gestützt werden. Das Endscheibenband 3 kann auch als Ring ausgeführt sein. Das ringförmige Endscheibenband 3 kann dann bei der Herstellung des Rotors 1 über den variablen Spalt 9a zur bereichsweisen Abdeckung der Permanentmagnete 7 in Rotationsrichtung R geschoben werden. Die Permanentmagnete 7 werden von einer Ummantelung 5 beaufschlagt. Die Ummantelung 5 dient zur Befestigung der Permanentmagnete 7 an ihrer vorgesehenen Stelle, insbesondere auf ihrer radialen Stelle auf der (verschobenen) Mantelfläche 25, 25a. Die Ummantelung 5 ist vorteilhaft eine Bandage 5, beispielsweise, in Harz getränkte, Glasfasern, oder ein glasfaserhaltiges Band. Die Bandage 5 wird nach dem Aufwickeln aushärtet und bildet eine feste Umformung des Rotors 1. Durch die Kombination der Ummantelung 5 und dem Endscheibenband 3 ergibt sich, bei dem hier ausgeführten Herstellungsverfahren, eine besonders glatte äußere Mantelfläche des Rotors.

Eine solche glatte Mantelfläche reduziert vorteilhaft die Reibung bei der Rotation des Rotors.

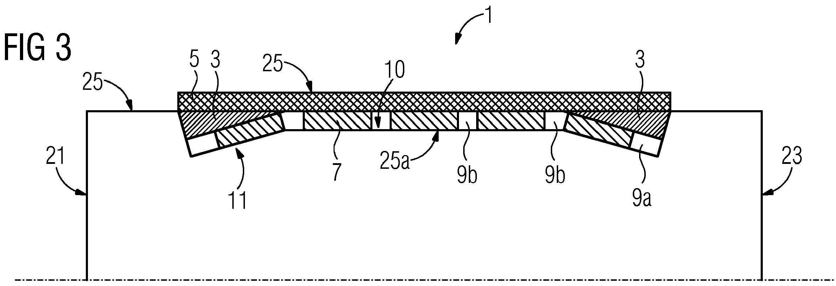

FIG 3 zeigt einen Rotor 1 in Schnittdarstellung, wobei die Vertiefung 10 bereichsweise nahe den Enden eine dreieckige Kontur 11 aufweist, so dass die Permanentmagnete 7 in der Mitte der Vertiefung 10 entlang einer verschobenen Mantelfläche 25a angeordnet sind. Zwischen den Permanentmagneten 7 in der Mitte der Reihe 27 befindet sich der Spalt 9b, wobei der Spalt 9a möglichst eng gewählt ist. Zum Ausgleich der Fertigungstoleranzen der Permanentmagnete 7 befindet sich an beiden Enden der Vertiefung 10 die Kontur 11, wobei die weitere Kontur 11 eine zur Rotationsachse R gerichtete dreieckförmige Form aufweist. Die Permanentmagnete 7, die im Bereich der Vertiefung 10 mit der Kontur 11 angeordnet sind, sind zur Rotationsachse R des Rotors 1 hin geneigt. Zwischen den geneigten Permanentmagneten 7 und der Innenfläche 29 der Vertiefung 10 erstreckt sich mit variabler Ausdehnung der variable Spalt 9a. Die Breite des variablen Spalts 9a ist je nach Position unterschiedlich und ergibt sich aufgrund der Fertigungstoleranzen der Permanentmagnete 7.

Der variable Spalt 9a wird mit dem Endscheibenband 3 abgedeckt. Durch eine geeignete Wahl des Endscheibenbandes 3 ergibt sich eine glatte Oberfläche der Mantelfläche 25 des Rotors 1. Eine Ummantelung 5 kann somit dergestalt aufgebracht werden, so dass die Mantelfläche 25 der Ummantelung 5n bzw. des Rotors 1, eine glatte Oberfläche aufweist. Der radial verlaufende Spalt 9b zwischen den im Inneren der Reihe 27 angeordneten Permanentmagneten 7 ist in der FIG 2 übergroß dargestellt, obgleich sich die Permanentmagnete 7 möglichst einander berühren. So wird verhindert, dass die Ummantelung in den Spalt 9b eingezogen wird. Das Ergebnis ist eine glatte Oberfläche der Ummantelung 5 und damit eine glatte Mantelfläche 25 des Rotors.

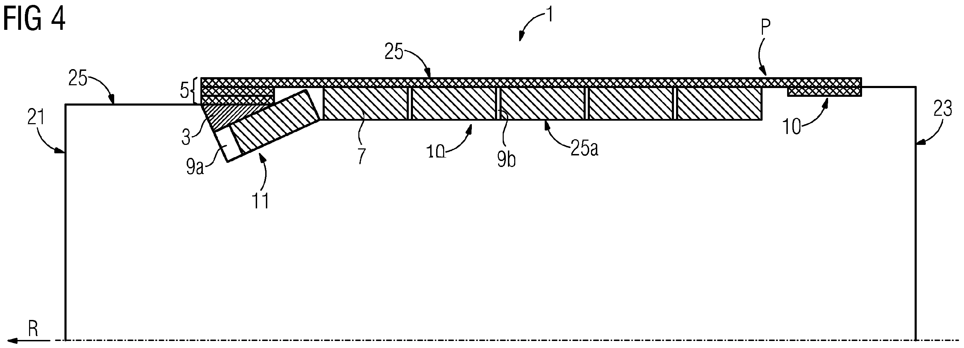

FIG 4 zeigt eine weitere Ausführung eines Rotors 1, welche mit dem erfindungsgemäßen Verfahren hergestellt worden ist. Der Rotor 1, weist eine Vertiefung 10 auf, welche für die Positionierung der Permanentmagnete 7 vorgesehen ist. Die Vertiefung 10 weist auf einer Seite eine Kontur 11 auf. Die Permanentmagnete 7, die nahe der Kontur 11 angeordnet worden sind, sind mit einer Seite leicht zur Rotationsachse R des Rotors 1 hin geneigt. Die Permanentmagnete 7 sind von der Position P aus in jeweils einer Reihe 27 in Richtung zu der Kontur 11 hin angeordnet worden. Auf der einen Seite der Vertiefung 10 berühren die Permanentmagnete 7, die von der Position P aus angeordnet worden sind, die Innenfläche 29 der Vertiefung. So definiert die Innenfläche 29 der Vertiefung die Position P. Der Spalt 9b zwischen den Permanentmagneten 7 untereinander wird dabei möglichst gering gewählt, d.h. dass sich die Permanentmagnete 7 in ihrer tangentialen Ausrichtung entlang der (verschobenen) Mantelfläche 25, 25a des Rotors 1 berühren. Aufgrund der Fertigungstoleranzen der Permanentmagnete 7 ergibt sich der variable Spalt 9a zwischen den zuletzt angeordneten Permanentmagneten 7 nahe der gewinkelt zur Deckfläche 21 des Rotors liegenden Innenfläche 29. Der variable Spalt 9a wird durch das Endscheibenband abgedeckt. Das Endscheibenband 3 wird in der hier gezeigten Ausführungsform dünn und von dreieckigem Profil gezeigt. Die Oberfläche des Endscheibenbandes 3 ist im Vergleich zu der Mantelfläche des Rotors etwas zur Rotationsachse R hin verschoben.

Durch die Kontur 11 und/oder das Profil des Endscheibenbandes 3 ergibt sich bereichsweise ein Absatz, der vorteilhaft mit der Ummantelung 5, insbesondere mit der Bandage 5, verstärkt beaufschlagt wird.

Ein solches verstärktes Beaufschlagen der Mantelfläche 25 des Rotors 1 dient vorteilhaft zur Erzeugung einer erhöhten Wickelspannung der Bandage 5. So wird die Bandage 5 in dem Bereich des Absatzes einige Male um den Rotor 1 gewickelt und so besteht die Möglichkeit eines Aufwickelns mit einer erhöhten Spannung/Zugspannung. Ein weiterer Bereich der Vertiefung 10 wird ebenfalls zur erhöhten Beaufschlagung der Bandage auf den Rotor genutzt, um der Ummantelung mit der Bandage 5 eine erhöhte Festigkeit zu ermöglichen.

Absätze sowie bereichsweise vorliegende Vertiefungen 10 dienen in vorteilhafter Art und Weise, wie hier exemplarisch gezeigt, zur Aufnahme einer erhöhten Beaufschlagung der Bandage 5 auf den Rotor, wobei eine glatte Mantelfläche 25 des Rotors nach der Herstellung gewährleistbar ist.

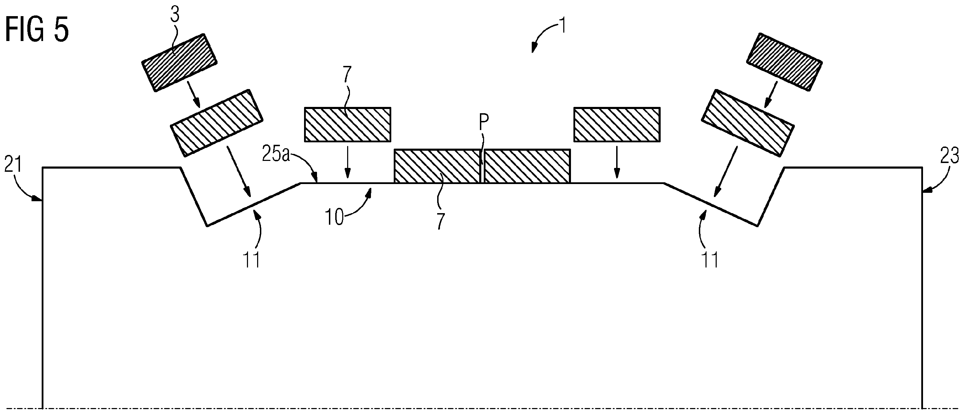

FIG 5 zeigt eine Explosionszeichnung des Rotors 1 mit seiner Vertiefung 10. Insbesondere dient die FIG 5 zur Veranschaulichung des Verfahrens zur Herstellung eines Rotors 1. Die Permanentmagnete 10 werden beim Verfahren zur Herstellung des Rotors 1 von der Position P ausgehend in beide Richtungen entlang der Rotationsachse R des Rotors 1 bestückt. Dabei werden die Spalte 9b zwischen den Permanentmagneten 7 möglichst klein gewählt, so dass die Permanentmagnete einander berühren. Die Permanentmagnete 7 werden so jeweils in einer Reihe 29 angeordnet. Die Permanentmagnete 7, die am jeweiligen Ende der Reihe 27 lokalisiert werden, sind der Kontur 11 der Vertiefung folgend, leicht schräg angeordnet. Nachdem die Permanentmagnete 7 in dem ihnen zugedachten Stellen in der Vertiefung 10 positioniert worden sind, wird der variable Spalt 9a mit dem Endscheibenband 3 abgedeckt. Das Endscheibenband 3 kann wie gezeigt, ein eckiges, der Kontur 11 angepasstes Profil aufweisen. Ebenso kann das Endscheibenband 3 über den variablen Spalt 9a gewickelt/geschoben werden, indem es auf einem Absatz 31 des Rotors 1 auf einer Seite aufliegt. Auf der anderen Seite liegt das Endscheibenband 3 dann auf dem letztangeordneten Permanentmagnet 7 der jeweiligen Reihe auf.

Die Fixierung des Endscheibenbandes 7 erfolgt vorteilhaft kraftschlüssig oder mit Hilfe der Ummantelung, die im Anschluss der Endscheibenbänder 3 aufgebracht wird.

Die Ummantelung wird im Anschluss an die Bestückung des Rotors mit den Permanentmagneten 7 auf den Rotor aufgebracht. Vorteilhaft wird, wie bereits aufgezeigt, eine Bandage 5 um die Permanentmagnete (bzw. um die Reihen von Permanentmagneten 7) aufgebracht. Dabei wird vorteilhaft auf einer Seite, beispielsweise nahe der Grundseite 21 auf der Mantelfläche 25 des Rotors 1, vorzugsweise im Bereich der Kontur der Vertiefung angefangen, gewickelt. Bei der Umwicklung ergibt sich eine hohe Zugspannung, eine hohe Festigkeit des Rotors 1 und eine glatte Mantelfläche 25 nach der Trocknung der Bandage 5.

Ein Rotor 1 oder eine Spindel, welche mittels diesem hier gezeigten Verfahren hergestellt worden ist, weist eine besonders glatte Oberfläche der Mantelfläche 25 auf und behebt die bis jetzt im Stand der Technik erforderliche Versetzung der Permanentmagnete 7 in Rotationsrichtung des Rotors 1 untereinander, so dass die Herstellung des Rotors 1 einfacher und damit kostengünstiger ist.

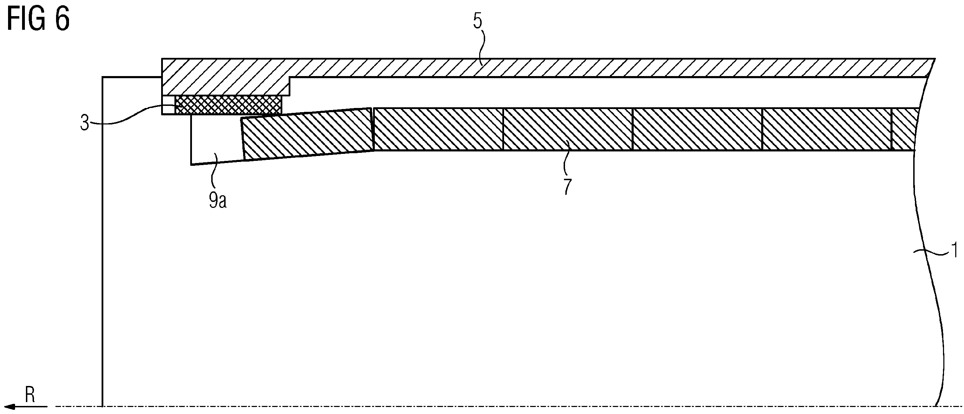

FIG 6 zeigt eine schematische Darstellung eines Rotors 1 im Schnitt. Die Permanentmagnete 7 befinden sich, aneinandergereiht und aneinander anstoßend, auf dem Rotor 1. Die Permanentmagnete 7 sind gegebenenfalls an der Mantelfläche des Rotors 1 befestigt. Der Permanentmagnet 7, der am nächsten zu der Innenfläche angeordnet ist, ist leicht zur Innenfläche hin versetzt angeordnet und/oder leicht schräg angeordnet. Vorteilhaft ist der nach außen gerichtete Permanentmagnet 7 zwischen 0,5 und 2 Millimeter zur Rotationsachse hin versetzt. Die Versetzung kann durch einen Permanentmagneten 7 mit einer geringeren Höhe und/oder durch eine Kontur 11 im Rotor 1 oder der Vertiefung 10 auftreten. Im Falle einer leichten Schrägstellung des entsprechenden Permanentmagneten 7 kann ein Winkel von 0.5 bis 3 Grad gewählt werden. An dem Ende der aneinandergereihten Permanentmagnete 7 befindet sich zwischen der Innenfläche 29 und dem versetzt/schräg angeordneten Permanentmagneten 7 der variable Spalt 9a.

Die versetzte Anordnung der Permanentmagnete 7 und/oder die zur Rotationsachse R geneigte Anordnung der Permanentmagnete 7 bewirkt bereichsweise eine nach innen versetzte Reduzierung des Außenradius des Rotors 1. Dieser Bereich wird durch das Endscheibenband 3 und durch die Ummantelung 7 zumindest teilweise ausgefüllt.

Das Endscheibenband 3 dient zur Überbrückung des variablen Spaltes 9a. Das Endscheibenband 3 kann ein Metallband oder ein Kunststoffband sein. Das Endscheibenband 3 weist eine Dicke von 0,5 Millimeter bis 3 Millimeter auf. Das Endscheibenband dient vorteilhaft zur Abdeckung des variablen Spaltes 9a. Das Endscheibenband 3 liegt dach dem Aufbringen auf der einen Seite bereichsweise auf den Permanentmagneten 7 auf. Auf der anderen Seite liegt das Endscheibenband 3 auf dem Rotor 1, insbesondere auf einer Aussparung der Innenfläche 29 des Rotors 1 auf.

Das Endscheibenband 3 dient zur Abdeckung des variablen Spaltes 9a. Durch die Abdeckung des variablen Spaltes wird verhindert, dass die Ummantelung 5 in den variablen Spalt 9a eindringt. Ein solches Eindringen der Ummantelung 5 in den variablen Spalt 9a würde eine nachteilige Vertiefung der nach außen gerichteten Oberfläche der Ummantelung 5 zur Folge haben.

Die Ummantelung 5 ist beispielsweise ein glasfaserhaltiges Band, welches, zumindest bereichsweise um den die Mantelfläche 25 des Rotors 1 sowie um die nach außen gerichteten Seiten der Permanentmagnete 7 gewickelt wird.

Zur Bereitstellung einer Spannung bei der Wicklung der Ummantelung 5 um den Rotor 1 (in der mit Permanentmagneten 7 bestückten Ausgestaltung) wird das Band zu Beginn seiner Aufwicklung einige Male um denselben Bereich gewickelt, also zu Anfang bereichsweise mit einigen Lagen übereinander gewickelt. Diese einige Lagen werden vorteilhaft im Bereich des Endscheibenbandes 3 aufgebracht. Vorteilhaft wird so, zumindest teilweise, der durch die versetzte/geneigte Anordnung der entsprechenden Permanentmagnete 7 vorhandene Raum ausgefüllt. Somit ergibt sich eine möglichst glatte äußere Mantelfläche des Rotors 1.

Zusammenfassend betrifft die Erfindung ein Verfahren zur Herstellung eines Rotors 1 sowie einen nach diesem Verfahren hergestellten Rotor 1 oder eine Spindel 1. Dazu wird ein Rotor 1 von einer Position P, insbesondere einer Position P, welche die Mantelfläche 25 des Rotors 1 auf in einer mittigen Position P der Längenausdehnung umschließt, mit Permanentmagneten 7 in jeweils einer Reihe 27 nach beiden Richtungen bestückt. Eine Kontur 11 in zumindest einem Bereich der Vertiefung 10 sorgt dafür, dass die jeweils zuletzt in einer Reihe 29 angeordneten Permanentmagnete 7 leicht zur Rotationsachse R des Rotors 1 hin geneigt angeordnet sind. Der gegebenenfalls entstehende variable Spalt 9a, hervorgerufen durch die Fertigungstoleranzen der Permanentmagnete 7, wird durch ein Endscheibenband 3 überdeckt. Anschließend werden die Permanentmagnete 7 und das Endscheibenband 3 mit einer Ummantelung 5, insbesondere einer Bandage 5, überdeckt. Die Ummantelung 5 kann hierbei im zumindest einen Bereich der Kontur 11 der Vertiefung 10 verstärkt aufgetragen/mehrmals aufgewickelt werden, so dass eine erhöhte Spannung entsteht. Vorteilhaft bleibt so der Durchmesser der Ummantelung 5 ungefähr konstant und der so hergestellte Rotor 1 weist eine erhöhte Glattheit auf seiner Mantelfläche 25 auf.

## Patentansprüche

1. Verfahren zur Herstellung eines Rotors (1), wobei Permanentmagnete (7) von einer Position (P) aus entlang der Rotationsachse des Rotors (1) nebeneinander bis zu einer Seite hin oder zu zwei Seiten hin angeordnet werden, wobei der Rotor (1) auf einer Mantelfläche (25, 25a) eine Vertiefung (10) aufweist, wobei die Permanentmagnete (7) in der Vertiefung (10) angeordnet werden, **dadurch gekennzeichnet, dass** zwischen den Außenseiten derjenigen Permanentmagneten (7), und zumindest einer Innenfläche der Vertiefung (10), die nicht parallel zur Mantelfläche verläuft, ein variabler Spalt (9a) gebildet wird, wobei der variable Spalt (9a) mit einem Endscheibenband (3) abgedeckt wird, und wobei eine Ummantelung (5) um den zumindest einen Teil der Mantelfläche des Rotors (1) und/oder die Außenseite der Permanentmagnete (7) herum aufgebracht wird.

2. Verfahren nach Anspruch 1, wobei die Permanentmagnete (7) in eine Vertiefung (10) angeordnet werden.

3. Verfahren nach Anspruch 1 oder 2, wobei die Permanentmagnete (7) so angeordnet werden, dass eine Ummantelung (5) beim Wickelprozess nicht in einen Spalt (9b) zwischen den Permanentmagneten (7) oder in den zumindest einen variablen Spalt (9) eindringt.

4. Verfahren nach einem der vorangehenden Ansprüche, wobei die Vertiefung (10) bereichsweise in zumindest einem Randbereich tiefer in den Rotor (1) hineinragt.

5. Verfahren nach einem der vorangehenden Ansprüche, wobei sich die Position (P) parallel zu einer Deckfläche und/oder parallel zu einer Bodenfläche um die Mantelfläche des Rotors (1) herum erstreckt.

6. Verfahren nach einem der vorangehenden Ansprüche, wobei die Ummantelung (5) mit einer Bandage (5) erfolgt.

7. Verfahren nach einem der vorangehenden Ansprüche, wobei die Position (P) etwa auf der halben Höhe der Mantelfläche des Rotors (1) positioniert ist und die Permanentmagnete (7) zu beiden Seiten in Rotationsrichtung der Rotors (1) angeordnet werden und wobei der variable Spalt (9a) sowohl nahe der Grundfläche und/oder nahe der Deckfläche des Rotors (1) mit dem Endscheibenband (3) abgedeckt wird.

8. Verfahren gemäß einem der vorangehenden Ansprüche, wobei das Endscheibenband (3) aus einem Kunststoff oder aus einem Metall besteht, das die Ausbreitung eines Magnetfeldes nur vernachlässigbar beeinträchtigt.

9. Verfahren nach einem der vorangehenden Ansprüche, wobei die Vertiefung (10) in Tiefe und Kontur so gewählt wird, dass sich nach der dem Ummanteln ein gleichbleibender Radius über die Länge parallel zur Rotationsachse (R) des Rotors(1) ergibt.

10. Rotor (1), der nach einem Verfahren gemäß der Ansprüche 1 bis 9 hergestellt worden ist.

11. Rotor (1), aufweisend Permanentmagnete, die auf dem Rotor (1) in einer Vertiefung (10) angeordnet sind, **dadurch gekennzeichnet, dass** die Permanentmagnete (7) an zumindest einer Seite einen variablen Spalt (9a) mit einer Innenfläche (29) der Vertiefung ausbilden, die nicht parallel zur Mantelfläche verläuft, wobei der variable Spalt (9a) mit einem Endscheibenband abgedeckt ist, wobei die nach außen zeigende Fläche der Permanentmagnete (7), das Endscheibenband sowie zumindest Teile der Mantelfläche des Rotors mit einer Ummantelung abgedeckt ist.

12. Rotor nach Anspruch 10, wobei die Vertiefung für die Permanentmagnete (7), eine Kontur aufweist, so dass die Permanentmagnete, die mit der Innenfläche (29) den variablen Spalt (9a) ausbilden und zumindest teilweise mit dem Endscheibenband (3) abgedeckt sind, leicht nach einer Seite geneigt sind.

13. Spindel (1), die mittels eines Verfahrens gemäß einem der Ansprüche 1 bis 9 hergestellt worden ist.

14. Eine elektrische Maschine, insbesondere eine permanenterregte Synchronmaschine, mit einem Rotor nach einem der Ansprüche 10 bis 12.

## Claims

1. Method for producing a rotor (1), wherein, starting from a position (P), permanent magnets (7) are arranged next to one another toward one side or toward two sides along the axis of rotation of the rotor (1), wherein the rotor (1) has a recess (10) on a lateral surface (25, 25a), wherein the permanent magnets (7) are arranged in the recess (10), **characterised in that** a variable gap (9a) is formed between the outer faces of those permanent magnets (7) and at least one inner surface of the recess (10) which does not extend parallel to the lateral surface, wherein the variable gap (9a) is covered with an end plate band (3), and wherein a sleeve (5) is applied around the at least one part of the lateral surface of the rotor (1) and/or the outer face of the permanent magnets (7).

2. Method according to claim 1, wherein the permanent magnets (7) are arranged in a recess (10).

3. Method according to claim 1 or 2, wherein the permanent magnets (7) are arranged in such a way that during the winding process a sleeve (5) does not intrude into a gap (9b) between the permanent magnets (7) or into the at least one variable gap (9).

4. Method according to one of the preceding claims, wherein the recess (10) protrudes deeper into the rotor (1) in sections in at least one boundary region.

5. Method according to one of the preceding claims, wherein the position (P) extends parallel to a top surface and/or parallel to a base surface around the lateral surface of the rotor (1).

6. Method according to one of the preceding claims, wherein the sleeve (5) is realised by means of a bandage (5).

7. Method according to one of the preceding claims, wherein the position (P) is positioned approximately at half the height of the lateral surface of the rotor (1) and the permanent magnets (7) are arranged on both sides in the direction of rotation of the rotor (1), and wherein the variable gap (9a) is covered with the end plate band (3) close to the base surface and/or close to the top surface of the rotor (1).

8. Method according to one of the preceding claims, wherein the end plate band (3) consists of a plastic or of a metal which has only a negligible detrimental effect on the propagation of a magnetic field.

9. Method according to one of the preceding claims, wherein the depth and contour of the recess (10) are chosen such that after the sleeving process a constant radius is produced over the length of the rotor (1) parallel to its axis of rotation (R).

10. Rotor (1) which has been produced according to a method according to claims 1 to 9.

11. Rotor (1), having permanent magnets which are arranged in a recess (10) on the rotor (1), **characterised in that** on at least one side the permanent magnets (7) form a variable gap (9a) with an inner surface (29) of the recess which does not extend parallel to the lateral surface, wherein the variable gap (9a) is covered with an end plate band, and wherein the outward-facing surface of the permanent magnets (7), the end plate band and at least parts of the lateral surface of the rotor are covered by means of a sleeve.

12. Rotor according to claim 10, wherein the recess for the permanent magnets (7) has a contour such that the permanent magnets which form the variable gap (9a) with the inner surface (29) and are at least partially covered with the end plate band (3) are inclined slightly toward one side.

13. Spindle (1) which has been produced by means of a method according to one of claims 1 to 9.

14. Electric machine, in particular a permanently excited synchronous machine, having a rotor according to one of claims 10 to 12.

## Revendications

1. Procédé de fabrication d'un rotor (1), dans lequel on met des aimants (7) permanents, à partir d'une position (P), le long de l'axe de rotation du rotor (1), les uns à côté des autres, jusqu'à un côté ou jusqu'aux deux côtés, le rotor (1) ayant une cavité (10) sur une surface (25, 25a) latérale, les aimants (7) permanents étant disposés dans la cavité (10), **caractérisé en ce que** on forme entre les côtés extérieurs des aimants (7) permanents et au moins une surface intérieure de la cavité (10), qui ne s'étend pas parallèlement à la surface latérale, un intervalle (9a) variable, on recouvre l'intervalle (9a) variable d'une bande (3) formant flasque et on dépose une gaine (5) autour de la au moins une partie de la surface latérale du rotor (1) et/ou du côté extérieur des aimants (7) permanents.

2. Procédé suivant la revendication 1, dans lequel on dispose les aimants (7) permanents dans une cavité (10).

3. Procédé suivant la revendication 1 ou 2, dans lequel on dispose les aimants (7) permanents de manière à ce qu'une gaine (5), lors du processus d'enroulement, ne pénètre pas dans un intervalle (9b) entre les aimants (7) permanents ou dans le au moins un intervalle (9) variable.

4. Procédé suivant l'une des revendications précédentes, dans lequel la cavité (10) pénètre par endroit dans au moins une partie de bord plus profondément dans le rotor (1).

5. Procédé suivant l'une des revendications précédentes, dans lequel la position (P) s'étend parallèlement à une surface supérieure et/ou parallèlement à une surface de fond autour de la surface latérale du rotor (1).

6. Procédé suivant l'une des revendications précédentes, dans lequel on produit la gaine (5) par un bandage (5).

7. Procédé suivant l'une des revendications précédentes, dans lequel on met la position (P) à peu près à mi-hauteur de la surface latérale du rotor (1) et on dispose les aimants (7) permanents des deux côtés dans le sens de rotation du rotor (1) et dans lequel on recouvre de la bande (3) formant flasque l'intervalle (9a) variable à la fois près de la surface de base et/ou près de la surface supérieure du rotor (1).

8. Procédé suivant l'une des revendications précédentes, dans lequel la bande (3) formant flasque est en une matière plastique ou en un métal qui ne porte atteinte que d'une manière négligeable à la propagation d'un champ magnétique.

9. Procédé suivant l'une des revendications précédentes, dans lequel on choisit la cavité (10) en profondeur et en contour, de manière à obtenir, après le gainage, un rayon constant sur la longueur parallèlement à l'axe (R) de rotation du rotor (1).

10. Rotor (1) qui a été fabriqué par un procédé suivant les revendications 1 à 9.

11. Rotor (1) ayant des aimants permanents, qui sont disposés sur le rotor (1) dans une cavité (10), **caractérisé en ce que** les aimants (7) permanents forment, au moins d'un côté, un intervalle (9a) variable avec une surface (29) intérieure de la cavité, qui ne s'étend pas parallèlement à la surface latérale, l'intervalle (9a) variable étant recouvert d'une bande formant flasque, les surfaces tournées vers l'extérieur des aimants (7) permanents, la bande formant flasque ainsi qu'au moins des parties de la surface latérale du rotor étant recouvertes d'une gaine.

12. Rotor suivant la revendication 10, dans lequel la cavité pour les aimants (7) permanents a un contour de manière à ce que les aimants permanents, qui forment avec la surface (29) intérieure l'intervalle (9a) variable et qui sont recouverts au moins en partie par la bande (3) formant flasque, soient inclinés légèrement d'un côté.

13. Broche (1), qui a été fabriquée à l'aide d'un procédé suivant l'une des revendications 1 à 9.

14. Machine électrique, notamment machine synchrone à excitation permanente, ayant un rotor suivant l'une des revendications 10 à 12.
